(19) Europäisches Patentamt
European Patent Office
Office européen des brevets

(11) EP 0 425 299 B1

(12) **EUROPEAN PATENT SPECIFICATION**

(45) Date of publication and mention
of the grant of the patent:
**13.03.1996 Bulletin 1996/11**

(51) Int. Cl.$^6$: **B60C 5/01**, B60C 9/22

(21) Application number: **90311752.1**

(22) Date of filing: **26.10.1990**

(54) **A pneumatic tyre**

Luftreifen

Bandage pneumatique

(84) Designated Contracting States:
**DE FR GB**

(30) Priority: **27.10.1989 JP 280041/89**
**27.10.1989 JP 280043/89**

(43) Date of publication of application:
**02.05.1991 Bulletin 1991/18**

(73) Proprietor: **SUMITOMO RUBBER INDUSTRIES LIMITED**
**Kobe-shi Hyogo-ken (JP)**

(72) Inventors:
• **Nakasaki, Eiji**
**Kakogawa-shi, Hyogo-ken (JP)**
• **Kato, Masayuki**
**Higashinada-ku, Kobe-shi, Hyogo-ken (JP)**

(74) Representative: **Stewart, Charles Geoffrey**
**SP TYRES UK LIMITED**
**Technical Division**
**Fort Dunlop, Erdington, Birmingham B24 9QT**
**(GB)**

(56) References cited:
**EP-A- 0 023 848         US-A- 4 014 969**

• **PATENT ABSTRACTS OF JAPAN vol. 8, no. 136 (M-304)(1573) 23 June 1984, & JP-A- 59 34904 (SUMITOMO GOMU KOGYO K.K.) 25 February 1984,**

## Description

The present invention relates to a pneumatic tyre of the type made by injection moulding of high polymer material. Generally an injection moulded tyre is formed by injecting a thermoplastic high polymer material into a moulding die and hardening, and therefore the manufacture is easy and low in cost. However, the tyre is inferior in strength and rigidity because the entire base body is made of a uniform material without a reinforcing member such as a carcass.

In the tread part of such a tyre, therefore, a reinforcement layer of reinforcement cord made of high elasticity material such as steel is generally provided in order to improve the cut resistance and puncture resistance, and the load borne by the tyre is supported by this tough reinforcement layer.

Such a reinforcement layer was conventionally formed by winding a strip or band of tyre cord fabric around the tyre and joining the ends by overlapping. This necessitated a large number of cord windings to obtain the necessary strength and this resulted in excessive tread rigidity thereby lowering the ride comfort of the tyre. Still more it brought about a significant rigidity difference to the tread rubber, and tread peeling was induced in rugged use, and hence the durability was poor.

On the other hand, tread peeling has been found to be influenced by the reinforcement swelling ratio $(Dc-Dn)/Dn$ which is the ratio between the outside diameter $Dn$ of the reinforcement layer before vulcanisation and the outside diameter $Dc$ of the reinforcement layer in the die during vulcanising. Hitherto, when vulcanising, in order to form a tread pattern by pushing the tread rubber into the V-groove formed in the vulcanising die, the reinforcement layer swelling ratio was set at a relatively large value of 0.05 to 0.1. As a result, the adhesive previously applied on the tyre main body surface was caused to flow together with the topping rubber of the reinforcement layer by the large pressure of the vulcanisation process, and thus the tyre main body and rubber contact directly with each other, and therefore the adhesion with the tyre main body is notably lowered.

A pneumatic tyre according to the preamble of claim 1 is known, for example, from EP-A-0023848.

It is the object of the invention to provide a pneumatic tyre in which tread peeling is restricted without spoiling the ride comfort and that running performance is enhanced by optimising the tyre profile in the inflated state, especially the shape and rigidity of the tread ground contact surface.

According to the present invention a pneumatic tyre is formed from a raw cover tyre having a toroidal tyre main body comprising an injection-formed high polymer material having a pair of bead parts with a bead core, two sidewall parts extending outwardly in the radial direction of the tyre from said bead part and a tread bottom part disposed between the outer ends of the two sidewall parts, a reinforcement layer comprising at least one ply comprising a reinforcement cord continuously and spirally wound around the outer surface of said tread bottom part in the circumferential direction; and a reinforcement layer swelling ratio $(Dc-Dn)/Dn$ , which is the ratio of the difference $(Dc-Dn)$ between the outside diameter $Dc$ of the reinforcement layer in the mould for vulcanising and the outside diameter $Dn$ of said reinforcement layer before vulcanisation to the outside diameter $Dn$ before vulcanisation of 0.04 or less and a tread rubber on the outside of the reinforcement layer, characterised in that the raw cover tyre has the reinforcement layer in a right circular cylindrical form centred on the tyre axis in the state where the tyre main body is inflated with standard internal pressure and the tread part has a cushion rubber layer between the reinforcement layer and the tread bottom part.

The tyre main body may easily be provided by using a pair of injection-formed semi-annular tyre pieces each having one bead part in which the bead core is embedded, one sidewall part contiguous to the bead part, and an extending piece contiguous to the sidewall part for forming the tread bottom part by mutually joining.

Preferably, the bead core is coated on its outer surface with an adhesive to provide adherence to the high polymer material. A polyester elastomer may be used as the high polymer material, and one or a plurality of reinforcement cords made of aromatic polyamide fibre of metallic fibre may be used for the reinforcement layer.

Preferably the reinforcement swelling ratio $(Dc- Dn)/Dn$ is set at 0.02 or less. Also the tread pattern may be preformed in the tread rubber body for example by using a pre-vulcanised tread.

In the resultant tyre, since a reinforcement layer which is composed of a spirally wound high strength reinforcing cord made of metallic fibre or aromatic polyamide fibre is disposed between the tyre main body and the tread rubber, the number of cord windings may be decreased while effectively restraining the tyre main body. As a result, excessive increase of tread rigidity is avoided and the ride comfort is improved. Also the rigidity difference to the tread rubber is lessened, thereby inhibiting the onset of tread peeling.

Moreover, since the tread rubber is fused and formed in one body with the tyre main body by heated pressure bonding in the vulcanising mould, the peeling is further inhibited and the durability is enhanced. Since the reinforcement layer is formed in a right circular cylindrical form centred on the tyre axis in the inflated state, the tread shape may be kept uniformly, without disturbing the cord arrangement, and the running performance is enhanced while uneven wear may be prevented.

Besides, when the reinforcement layer swelling ratio $(Dc-Dn)/Dn$ is 0.04 or less, flow of the reinforcement layer due to the presence of the topping rubber is prevented, and the resultant lowering of adhesion is prevented by decreasing transfer of the adhesive. In such a case, meanwhile, it is preferable to form a tread pattern preliminarily on the tread rubber body.

An embodiment of the present invention will now be described, by way of example, referring to the attached diagrammatic drawings, in which:

Figure 1 is a sectional view showing an embodiment of a pneumatic tyre of the invention;
Figure 2 is a sectional view showing the bead core;
Figure 3 is a perspective view showing its supports in the mould;
Figure 4 is a sectional view showing some parts of the tyre;
Figure 5 and 6 are magnified sectional views showing the joining process of the tyre parts;
Figures 7 and 8 are schematic drawings showing the step of forming the raw cover tyre by mounting the reinforcement layer and the tread rubber on the tyre main body;
Figure 9 is a sectional view showing the final forming or shaping in the mould; and
Figure 10 is a tyre sectional view used for a separation resistance test of the reinforcement layer.

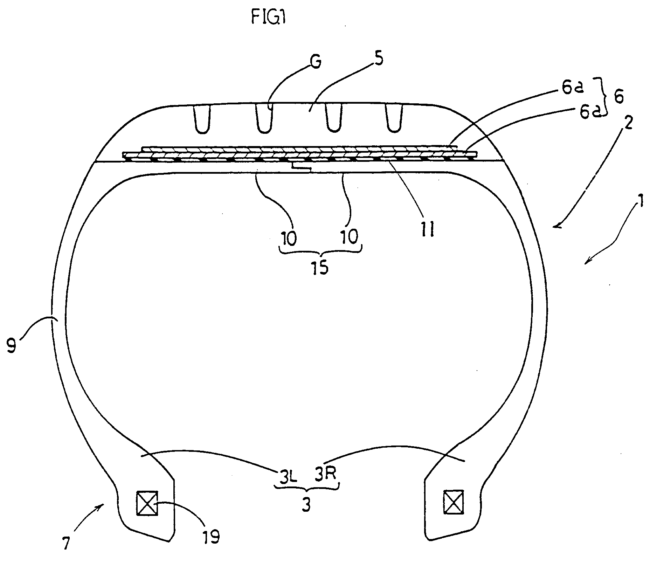

In Figure 1, a pneumatic tyre 1 comprises a toroidal tyre main body 2 made of high polymer material, a tread reinforcement layer 6, and a tread rubber 5, which are assembled together to form a raw cover tyre which is substantially made into a single body by vulcanisation in a vulcanising die. The tyre main body 2 consists of a pair of semi-annular tyre pieces 3L,3R.

The tyre pieces 3L,3R are each shaped in a half ring, as if dividing a conventional pneumatic tyre into right and left parts on the tyre's equatorial plane. Each of the tyre pieces 3L,3R comprises one bead part 7, a sidewall part 9 contiguous and extending outwardly in the radial direction from the bead part 7, and an extending piece 10 providing a tread bottom 15 of a tyre contiguous to the sidewall part 9. In each bead 7 a bead core 19 mode of an inelastic material such as steel wire is provided as in a conventional tyre.

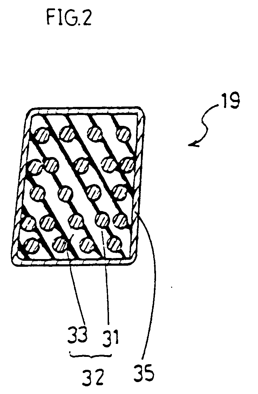

The sectional shape of the tyre main body 2 is not limited to the lower aspect tyre for passenger cars as shown in Figure 2 and may be of other sizes depending on the required final tyre size.

The tyre pieces 3L,3R together provide an integral main tyre body 2 by the front ends of edges of the extending pieces 10 being overlapped and joined at the tyre equator to provide a continuous tread bottom 15 corresponding to the carcass crown of a conventional tyre.

For the high polymer material of the tyre parts 3L,3R, liquid polyurethane, polyisoprene, polyester elastomer or the like may be used. Preferably, polyester elastomer is used because it is excellent in hardness, tensile strength and other such properties after hardening or setting.

The reinforcement layer 6 is fixed to the outer circumference of the tread bottom 15.

The reinforcement layer 6 is composed of at least one ply 6a. In this case two plies 6a are used each formed by arranging reinforcing cords of high elasticity made of, for example, steel fibres or other metallic fibres lying at an angle close to zero degrees with respect to the tyre circumferential direction. In this embodiment the case angle is 0 to 5°.

The reinforcement ply 6a is formed by continuously and spirally winding reinforcing cord from one edge to the other edge of the reinforcement ply 6a. Alternatively reinforcing cord may be wound spirally from the type equator to both edges, thereby preventing any pull phenomenon due to cord inclination.

The number of plies in the reinforcement layer 6 is determined depending on the required performance of the specific tyre.

The reinforcing cord, instead of metallic fibre cords, may be aromatic polyamide fibre cords of low elongation and high strength. In such a case, the number of twists should be preferably 35 x 35 times/10cm or less. When metallic fibre cords are used, the wear resistance is improved, and when aromatic polyamide fibre cords are used, the ride comfort is enhanced. The reinforcement layer 6 is formed by spirally and continuously winding one or more, ten in this embodiment, rubber-coated reinforcing cords simultaneously in the tyre circumferential direction. The crown part of the tyre main body 2 may be effectively restrained by a small number of windings, and lifting of the tyre main body 2 due to, for example, high speed rotation is thus suppressed. Between the reinforcement layer 6 and the tread bottom part 15, a cushion rubber 11 is provided. The cushion rubber 11 is made of a rubber sheet of a relatively soft material, for example, having a hardness of about 50 to 70 JIS A class, in a thickness of about 0.2 to 2mm, and firstly fitted to the outer surface of the tread bottom 15 with adhesive 12. Over the outside of the reinforcement layer 6, a semi-vulcanised or vulcanised tread rubber 5 with a tread pattern G pre-formed in the outer surface is applied. Finally the tyre main body 2, cushion rubber 11, the reinforcement layer 6 and the tread rubber 5 are fused and formed into a single body by vulcanising in a vulcanising mould.

The material of the tread rubber 5 is the same as in an ordinary tyre, and it is formed as an extruded rubber strip or in a ring form. For the adhesive, various materials may be used which are capable of joining high polymer materials when heated for vulcanisation. For example, isocyanate vulcanisation adhesive or halogenated rubber vulcanisation adhesive may be used, preferably applied as a layer.

Since the tyre 1 is strengthened greatly by the reinforcement layer 6 in the tread part T, and movement of the tyre main body 2 is therefore effectively suppressed, so that tyre rigidity is enhanced.

What is more, since the reinforcement layer 6 can restrain the tread bottom 15 with only a small number of cords, excessive increase of tread rigidity is suppressed, the ride comfort is maximised, and separation due to rigidity differences to the tread rubber 5 is prevented.

The winding radius of the reinforcing cord and the winding tension are determined so that the reinforcement layer 6 is approximately in a right circular cylindrical form centred on the tyre axis when considered in the inflated state to standard internal pressure. Hence, it is possible to prevent cord disturbance and dislocation of the reinforcing cord to the shoulder caused by convex curving of the tread bottom 15 in the inflated state. As a result, the tread shape is uniformly retained and uniformity is enhanced, while the running performance is improved.

In this invention, the right circular cylindrical form means that in the sectional plane, inclusive of the tyre axis, the line along the outer surface of the reinforcement layer 6 is extending straight and parallel to the tyre axis or is curved with a radius of 1000mm or more with its centre on the tyre equator.

This pneumatic tyre 1 is mounted on the same wheel rim, as a conventional tyre for use.

A manufacturing method for the pneumatic tyre is now explained below and comprises:-

Step (a) - forming two semi-annular tyre pieces 3L,3R by injection moulding;

Step (b) - forming the tyre main body 2 by joining the tyre pieces 3L,3R;

Step (c) - forming the raw cover type 1A by sequentially adhering an unvulcanised cushion rubber 11, an unvulcanised reinforcement layer 6 and a semi-vulcanised or vulcanised tread rubber 5 to the tyre main body; and

Step (d) - vulcanising the assembled raw cover tyre 1A.

In step (a), after placing a ring-shaped bead core 19 into the injection mould A, high polymer material is injected and hardened to form the tyre pieces 3L and 3R respectively.

In more detail a bead core 19 shown in Figure 2 is formed by vulcanising a bead core base body 32 composed of wound bead cords 31 coated in rubber 33. An adhesive 35 is applied around the outer circumference of the bead core 19.

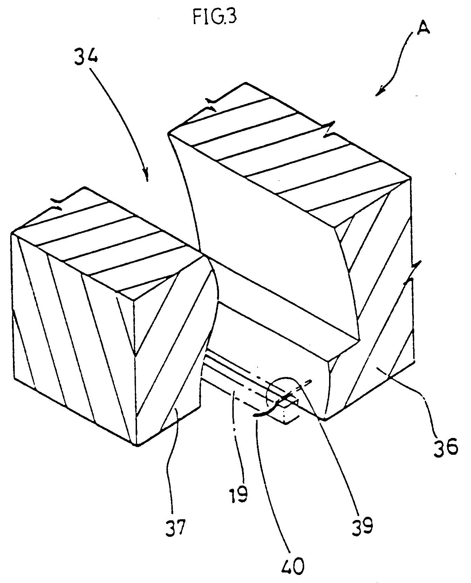

For this adhesive 35, any material capable of dissolving the polyester elastomer used for the tyre pieces 3L,3R is usable so as to bond the rubber surface layer of the bead core 19 and the elastomer. Preferably a homogeneous material is used for the adhesive 12 for example, Kemlock 210 (Trade Mark) of Road Far East Incorporated. Meanwhile, a die or mould A comprising an outer pattern 36 and inner pattern 37 forming together a void space 34 for forming the tyre pieces 3L,3R therein, and having in the area for forming the bead 7, as roughly shown in Figure 3, a support piece 39 laid across the void space 34 at the position required to locate and position the bead core 19.

The support piece 39 is made of a small-diameter steel wire having the elasticity of a spring. One end is fixed in the outer pattern 36, while a guide part 40 concave inwards in the radial direction of the tyre is formed at the other end which projects toward the void space 34. The bead core 19 is held in the void space 34 by engagement with guide part 40. The adhesive 35 applied to the outer wall of the bead core 19 dissolves the polyester elastomer contacting the bead core 19, thereby forming a mixture with the adhesive 35, and as the elastomer is hardened, the tyre pieces 3L,3R and the bead core 19 are adhered firmly together.

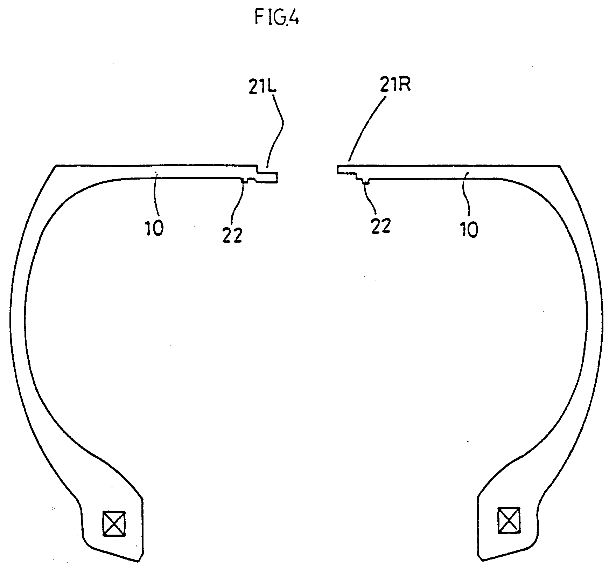

The tyre pieces 3L,3R are provided with co-engaging junction pieces 21L,21R to act as engagement parts at the outer edges of the extending pieces 10 as shown in Figure 4, and a protrusion 22 extending in the tyre circumferential direction is disposed inside the front end of each extending piece 10.

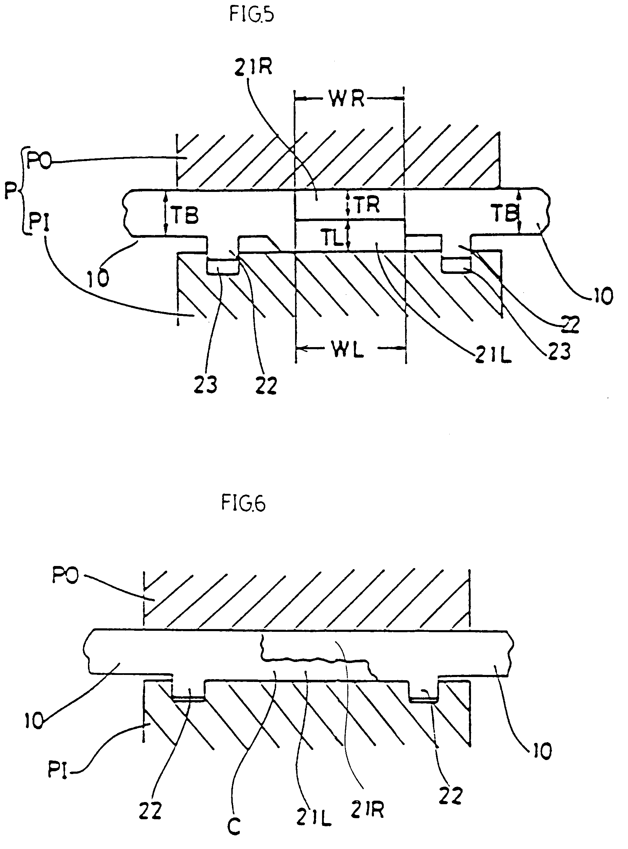

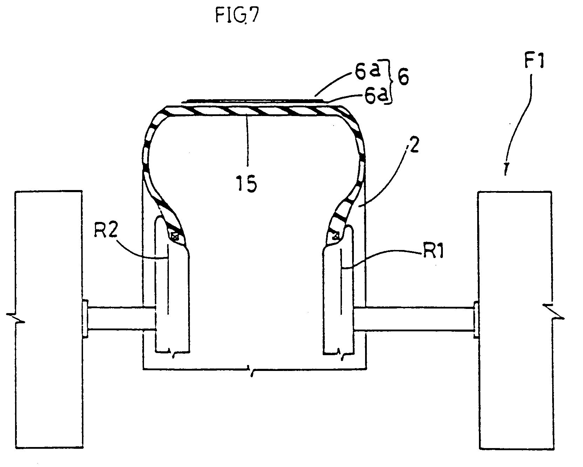

The junction piece 21R of the tyre piece 3R is formed level with the outer circumference of the extending piece 10 as shown in Figures 5, and 6, and its thickness TR is larger than half the thickness TB of the extending piece 10. The tyre axial direction width SW of the junction piece 21R is between 5 and 20mm.

The junction piece 21L of the tyre piece 3L is similarly arranged with its thickness TL larger than half the thickness TB of the extending piece 10, and the tyre axial direction width WL is the same as the width WR of the junction piece 21R. The outer circumference of the junction piece 21L is positioned at the inner side of the tyre radial direction from the outer circumference of the extending piece 10.

In step (b), the junction piece 21R is positioned over the outer surface of the junction piece 21L so as to engage them together, and by fusing the junction pieces by using a junction die P shown in Figures 5 and 6 the tyre pieces 3L,3R are joined to form the tyre body 2.

More specifically, the tyre pieces 3L,3R are set face-to-face, and the junction pieces 21L,21R are joined inside and outside the tyre radial direction as mentioned above, and they are assembled temporarily. Consequently, the inner die P1 and outer die P0 of the junction die P are placed on the inside and the outside of the tyre in the radial direction. The inner die P1 is provided with locating grooves 23 in the projection 22 to prevent movement of the extending pieces 10 in the lateral direction. The overlapped portions are heated by the junction die P itself or by a separate high frequency heater or the like, and pressurized by the die so that the areas of the junction pieces 21L,21R are fused and joined.

Generally, since the strength of the junction area tends to decline, the wall thickness of the junction part is increased by setting the thicknesses TL,TR of the junction pieces 21L,21R to be somewhat larger than half the thickness TB of the extending piece 10, thereby preventing loss of strength.

The projection 22 may be also disposed on the outer circumference of the extending piece 10, and then the locating groove 23 would be provided in the outer die P0.

Thus, in step (b), since the tyre main body 2 is formed by heat joining of the tyre pieces which are produced by the injection method, it is possible to mass-produce in a short time and at a high precision.

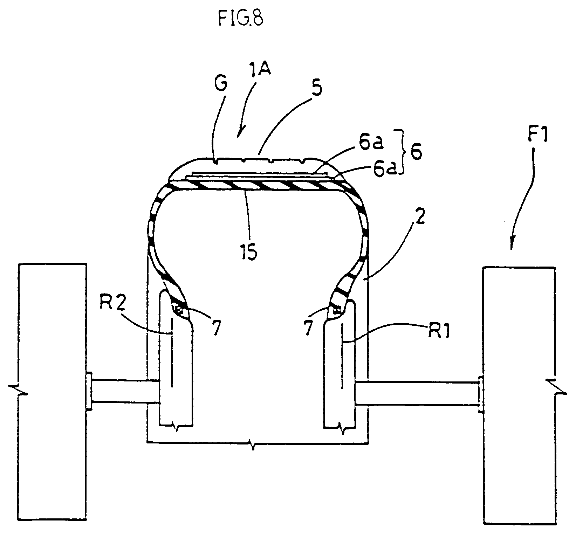

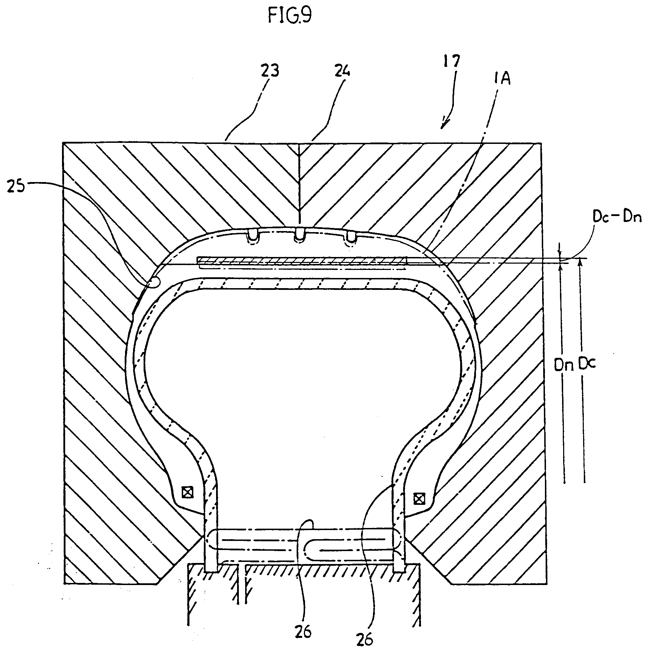

In step (c), as shown in Figures 7 and 8, the tyre main body 2 is held between bead holding rings R1,R2 on a tyre forming machine F1, and the outer circumference of the tread bottom 15 is buffed. Then adhesive is applied and sufficiently dried, and the unvulcanised cushion rubber 11, reinforcement layer 6 and vulcanised tread rubber 5 are fitted, thereby forming the complete raw cover tyre 1A. The tread pattern G is formed in the tread rubber beforehand, and therefore it is possible to eliminate the residual strain and residual stress acting on the reinforcing cord usually caused when the tread pattern is depressed by the vulcanising pressure, so that the uniformity is enhanced.

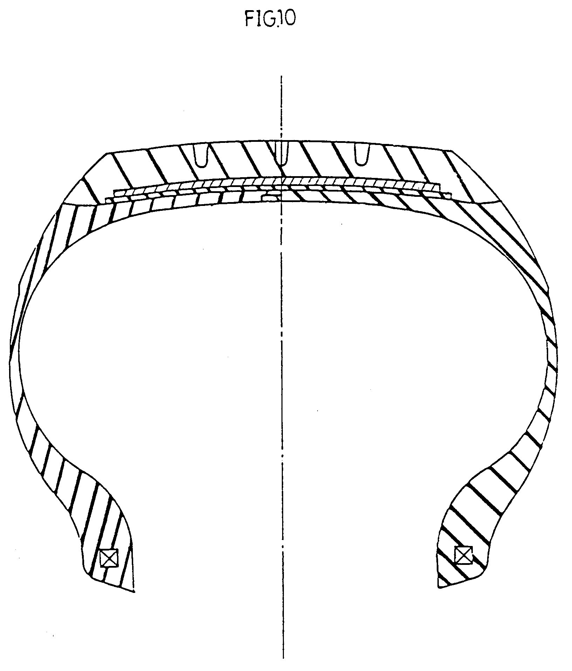

In step (d), as shown in Figure 9, the raw cover tyre 1A is heated and pressurized in a vulcanising mould 17. As a result, the reinforcement layer 6 is fused and formed into one body together with the tread rubber 5 by heating and vulcanisation.

The vulcanisation mould 17 comprises a fixed mould 23, a movable mould 24 which may contact the fixed mould 23 to form a cavity 25 having the shape of the tyre outer circumference, and a bladder 26 which is arranged so that it can be unfolded into the tyre in the cavity 25.

The bladder 26 unfolds and bulges out as steam is injected into it and the inner cavity space containing the crude tyre 1A is pressurized, and pressed against the inner wall of the cavity 25. Thus heat and pressure are applied to the tyre.

In this example, the upward force of the raw cover tyre 1 from the bladder 27 which expands the reinforcement layer 6 is restricted compared to the conventional tyre.

That is, the reinforcement layer 6 in the raw cover tyre 1A has a reinforcement layer swelling ratio (Dc-Dn)/Dn, which is the ratio of the difference (Dc-Dn) between the outside diameter Dc of the reinforcement layer 6 in the die when being vulcanised and the outside diameter Dn before vulcanisation, defined as 0 or more and 0.04 or less.

If smaller than 0, it is difficult to insert the tyre body 1A into the cavity 25. If exceeding 0.04, the topping rubber of the reinforcing ply of the reinforcement layer 6 and the cushion rubber 11 tend to flow out on heating and pressurising.

Together with this flow, the adhesive runs out, and then the opposing tyre main body and cushion rubber 11 directly contact each other without intervening adhesive. As a result, lack of adhesion tends to occur between the tyre main body 2 and the cushion rubber 11. This lack of adhesion is particularly likely to occur near the equator of the tyre where the pressing force is large or in the shoulder area where the rubber flow is large. Also the lack of adhesion occurring at the edges of the reinforcement layer 6 tends to cause belt edge looseness, thereby spoiling the durability of the tyre.

Accordingly, the reinforcement layer swelling ratio (Dc-Dn)/Dn is preferably set at 0.03 or less, more preferably at 0.02 or less, and as a result the adhesion strength is increased and the durability is enhanced.

Incidentally, the inventors of this invention found that defective adhesion with the tyre main body 2 can be effectively inhibited by this choice of the reinforcement layer swelling ratio (Dc-Dn)/Dn, regardless of the structure of the reinforcement layer 6 in this invention. That is, when the reinforcement layer is formed by a tyre-fabric reinforcing ply having reinforcing cords at an angle of 0 to 30°, with respect to the tyre equator, adhesion strength is also improved. Further, the reinforcing cord, aside from the metal fibres and aromatic polyamide fibres may comprise organic fibre cords such as polyester, rayon or nylon.

Prototype tyres having size 185/70SR14 and the tyre structure shown in Figure 1 were fabricated according to the specification in Table 1 by the manufacturing method stated above, and the strength, durability, ride comfort and steering stability of the tyres were tested. For the durability test, conforming to the JATMA conditions, tyres having the specified internal pressure and load were run on a drum at a standard speed for 30,000km. Also a high speed durability test was conducted by 20 minutes running at a speed of 170km/h according to the conditions of test B of JATMA, and also the ride comfort and steering stability were evaluated by feel running on an actual car.

Table 2 shows the test results of a separation resistance performance test for the reinforcement layer in terms of different reinforcement layer swelling ratio (Dc-Dn)/Dn. The tyre used in the test had the structure as shown in Figure 10. The high polymer material for forming the tyre main body was polyester elastomer (Trade Mark High Trail 4047) and for the adhesive, isocyanate vulcanising adhesive and halogenated rubber vulcanising adhesive were used being applied twice. In Example 1, a cushion rubber layer was not used, and in Examples 2 to 9, a cushion rubber made of rubber of NR/BR = 60/40 in a thickness of 1mm was used. As the reinforcing cord, in Example 7 alone, aromatic polyamide cord (twist: 35 x 35 T/10cm, finish cord density: 36 cords/5cm, finish cord inclination angle to tyre equator: 18°) was used, and in the other tyres, steel cord (cord size: 1 x 5/0.25, finish cord density: 37 cords/5cm, finish cord inclination angle to tyre equator: 18°) was used, and 2100SBR was used as the tread rubber in all examples.

The separation test in Table 2 is a peeling strength test between the tyre main body and the reinforcement layer, which was measured according to the separation test in JIS K 6301 (Physical testing methods for vulcanised rubber). The durability performance was measured according to the durability performance test HIS D 4230 (Tyres for automobiles), at a load of 631kg, a speed of 80km/h and an internal pressure of $1.9kg/cm^2$.

As shown in the Table 2, in the sample in which the reinforcement layer swelling ratio (Dc-Dn)/Dn was less than 0.04, the separation strength of the adhesion area was large, and a sufficient durability to withstand 20,000km used was obtained.

Table 1

| tire main body | polyester elastomer |
|---|---|
| reinforcement layer | 2 plies |
| reinforcing cord | aromatic polyamide 1500 d/2 |
| cord twist | 35×35T/10cm |
| cord drives | 36 cords/5cm |
| cord angle | 0° |
| tread rubber | 100SBR |
| tire strength | 4780kgf-cm or more |
| durability | no damage |
| high speed durability | no damage |
| riding comfort | satisfactory |
| steering stability | satisfactory |

Table 2

| | example 1 | example 2 | example 3 | example 4 |
|---|---|---|---|---|
| reinforcement layer swelling ratio $(Dc-Dn)/Dn$ | 0.01 | 0.01 | 0 | 0.02 |
| separation test result of high polymer material and reinforcement layer | 14.8 | 18.5 | 18.0 | 18.2 |
| duratibility test performance | no damage in 20,000 km running | no damage in 20,000 km running | no damage in 20,000 km running | no damage in 20,000 km running |

| | example 5 | example 6 | example 7 | comparison 1 | comparison 2 |
|---|---|---|---|---|---|
| | 0.03 | 0.04 | 0.01 | 0.05 | 0.06 |
| | 16.9 | 13.4 | 18.1 | 6.3 | 3.2 |
| | no damage in 20,000 km running | no damage in 20,000 km running | no damage in 20,000 km running | adhesive peeled after 3015 km | adhesive peeled after 49 km |

**Claims**

1. A pneumatic tyre formed from a raw cover tyre having a toroidal tyre main body (2) comprising an injection-formed high polymer material having a pair of bead parts (7) with a bead core (19), two sidewall parts (9) extending outwardly in the radial direction of the tyre from said bead part (7) and a tread bottom part (15) disposed between the outer ends of the two sidewall parts (9), a reinforcement layer (6) comprising at least one ply (6a) comprising a reinforcement cord continuously and spirally wound around the outer surface of said tread bottom part (15) in the circumferential direction; a reinforcement layer swelling ratio (Dc-Dn)/Dn , which is the ratio of the difference (Dc-Dn) between the outside diameter Dc of the reinforcement layer in the mould for vulcanising and the outside diameter Dn of said reinforcement layer before vulcanisation to the outside diameter Dn before vulcanisation, of 0.04 or less, and a tread rubber (5) on the outside of the reinforcement layer (6), characterised in that the raw cover tyre has the reinforcement layer in a right circular cylindrical form centred on the tyre axis in the state where the tyre main body (2) is inflated with standard internal pressure, and the tread part (5) has a cushion rubber layer (11) between the reinforcement layer (6) and the tread bottom part (15).

2. A pneumatic tyre according to claim 1 characterised in that the tyre main body (2) comprises a pair of semi-annular tyre pieces (3L,3R) each comprising one bead part (7) in which the bead core (19) is buried, one sidewall part (9) contiguous to the bead part (7) and an extending piece (10) contiguous to the sidewall part for forming the tread bottom part (15), the said extending pieces being joined together.

3. A pneumatic tyre according to claim 1 or 2 characterised in that the bead core (19) is formed by vulcanising a bead core body (32) composed of wound bead cords (31) and rubber (33), and the bead core is coated on its outer surface with an adhesive to provide adherence to the high polymer material.

4. A pneumatic tyre according to claim 1, 2 or 3 characterised in that the high polymer material is a polyester elastomer.

5. A pneumatic tyre according to claim 1, 2, 3 or 4 characterised in that the reinforcement layer (6) is formed by spirally and continuously winding a single or a plurality of reinforcement cords made of aromatic polyamide fibre or metallic fibre.

6. A pneumatic radial tyre according to any one of claims 1 to 5 characterised in that the reinforcement swelling ratio (Dc-Dn)/Dn  is 0.02 or less.

7. A pneumatic tyre according to any one claims 1 to 6, characterised in that the cushion rubber layer has a thickness of 1mm.

8. A pneumatic radial tyre according to any one of claims 1 to 7, characterised in that the cushion rubber layer comprises a blend of natural rubber NR and butadiene rubber BR in a ratio of 60/40 respectively.

**Patentansprüche**

1. Ein Luftreifen, der aus einem Rohmantelreifen gebildet ist, mit einem toroidalen Reifenhauptkörper (2), der ein spritzgeformtes Hochpolymermaterial umfaßt, mit einem Paar Wulstteilen (7) mit einem Wulstkern (19), zwei Seitenwandteilen (9), die sich nach außen in die Radialrichtung des Reifens von dem Wulstteil (7) erstrecken, und einem Laufflächenbodenteil (15), der zwischen den äußeren Enden der zwei Seitenwandteile (9) angeordnet ist, einer Verstärkungsschicht (6), die wenigstens eine Lage (6a) mit einem Verstärkungskord umfaßt, der kontinuierlich und spiralförmig um die äußere Oberfläche des Laufflächenbodenteils (15) in der Umfangsrichtung gewickelt ist; einem Verstärkungsschichtschwellverhältnis (Dc-Dn)/Dn , welches das Verhältnis der Differenz (Dc-Dn) zwischen dem Außendurchmesser Dc der Verstärkungsschicht in der Form zum Vulkanisieren und dem Außendurchmesser Dn der Verstärkungsschicht vor der Vulkanisierung zu dem Außendurchmesser Dn vor der Vulkanisierung ist, von 0,04 oder weniger, und einem Laufflächengummi (5) auf der Außenseite der Verstärkungsschicht (6), dadurch gekennzeichnet, daß der Rohmantelreifen die Verstärkungsschicht in einer geraden kreiszylindrischen Form aufweist, die auf der Reifenachse in dem Zustand zentriert ist, in dem der Reifenhauptkörper (2) mit Standardinnendruck aufgepumpt ist, und der Laufflächenteil (5) eine Polstergummischicht (11) zwischen der Verstärkungsschicht (6) und dem Laufflächenbodenteil (15) aufweist.

2. Ein Luftreifen nach Anspruch 1, dadurch gekennzeichnet, daß der Reifenhauptkörper (2) ein Paar halbringförmige Reifenstücke (3L, 3R) mit jeweils einem Wulstteil (7), in welchem der Wulstkern (19) begraben ist, einem Seitenwandteil (9), der an das Wulstteil (7) angrenzt und einem Erweiterungsstück (10) umfaßt, das an das Seitenwandteil angrenzt, um den Laufflächenbodenteil (15) zu bilden, wobei die Erweiterungsstücke miteinander verbunden sind.

3. Ein Luftreifen nach Anspruch 1 oder 2,
dadurch gekennzeichnet, daß der Wulstkern (19) durch Vulkanisieren eines Wulstkernkörpers (32) gebildet ist, der aus gewickelten Wulstkorden (31) und Gummi (33) zusammengesetzt ist, und der Wulstkern auf seiner äußeren Oberfläche mit einem Anhaftmittel überzogen ist, um eine Anhaftung an das Hochpolymermaterial vorzusehen.

4. Ein Luftreifen nach Anspruch 1, 2 oder 3,
dadurch gekennzeichnet, daß das Hochpolymermaterial ein Polyesterelastomer ist.

5. Ein Luftreifen nach Anspruch 1, 2, 3 oder 4,
dadurch gekennzeichnet, daß die Verstärkungsschicht (6) durch spiralförmiges und kontinuierliches Wickeln eines einzigen oder einer Vielzahl von Verstärkungskorden gebildet ist, die aus aromatischer Polyamidfaser oder Metallfaser hergestellt sind.

6. Ein Luftradialreifen nach einem der Ansprüche 1 bis 5,
dadurch gekennzeichnet, daß das Verstärkungsschwellverhältnis (Dc-Dn)/Dn  0,02 oder weniger beträgt.

7. Ein Luftreifen nach einem der Ansprüche 1 bis 6,
dadurch gekennzeichnet, daß die Polstergummischicht eine Dicke von 1 mm aufweist.

8. Ein Luftradialreifen nach einem der Ansprüche 1 bis 7,
dadurch gekennzeichnet, daß die Polstergummischicht eine Mischung aus Naturgummi NR und Butadiengummi BR in einem Verhältnis von jeweils 60/40 umfaßt.

**Revendications**

1. Pneumatique formé d'un pneumatique à revêtement non vulcanisé ayant un corps principal toroïdal (2) de pneumatique qui comprend une matière à base de haut polymère mis en forme par injection et ayant deux parties de talon (7) ayant une tringle (19), deux parties de flanc (9) dépassant vers l'extérieur de la partie de talon (7) dans la direction radiale du pneumatique, et une partie inférieure (15) de bande de roulement disposée entre les extrémités externes des deux parties de flanc (9), une couche d'armature (6) comprenant au moins une nappe (6a) ayant un câblé d'armature enroulé de façon continue et en spirale autour de la surface externe de la partie inférieure (15) de bande de roulement dans la direction circonférentielle, un rapport de gonflement de couche d'armature (Dc-Dn)/Dn , qui est le rapport de la différence (Dc-Dn) entre le diamètre externe Dc de la couche d'armature dans le moule de vulcanisation et le diamètre externe Dn de la couche d'armature avant vulcanisation au diamètre externe Dn avant vulcanisation, inférieur ou égal à 0,04, et un caoutchouc (5) de bande de roulement placé à l'extérieur de la couche d'armature (6), caractérisé en ce que le pneumatique à revêtement non vulcanisé a la couche d'armature sous forme cylindrique de section droite circulaire centrée sur l'axe du pneumatique lorsque le corps principal (2) du pneumatique est gonflé à la pression interne nominale, et la partie (5) de bande de roulement a une couche (11) de caoutchouc d'amortissement placée entre la couche d'armature (6) et la partie inférieure (15) de bande de roulement.

2. Pneumatique selon la revendication 1, caractérisé en ce que le corps principal (2) du pneumatique comporte une paire de pièces semi-annulaires (3L, 3R) de pneumatique comprenant chacune une partie de talon (7) dans laquelle est enfermée la tringle (19), et une partie de flanc (9) contiguë à la partie de talon (7), et une pièce de prolongement (10) contiguë à la partie de flanc et formant la partie inférieure (15) de bande de roulement, les pièces de prolongement étant raccordées mutuellement.

3. Pneumatique selon la revendication 1 ou 2, caractérisé en ce que la tringle (19) est formée par vulcanisation d'un corps de tringle (32) composé de câblés enroulés de talon (31) et de caoutchouc (33), et la tringle est revêtue à sa surface externe d'un adhésif destiné à assurer l'adhérence vis-à-vis de la matière à base d'un haut polymère.

4. Pneumatique selon la revendication 1, 2 ou 3, caractérisé en ce que la matière à base d'un haut polymère est un élastomère de polyester.

5. Pneumatique selon la revendication 1, 2, 3 ou 4, caractérisé en ce que la couche d'armature (6) est formée par enroulement continu en spirale d'un seul câblé ou de plusieurs câblés d'armature formés de fibres de polyamide aromatique ou métalliques.

6. Pneumatique à carcasse radiale selon l'une quelconque des revendications 1 à 5, caractérisé en ce que le rapport de gonflement d'armature $(Dc-Dn)/Dn$ est inférieur ou égal à 0,02.

7. Pneumatique selon l'une quelconque des revendications 1 à 6, caractérisé en ce que la couche de caoutchouc d'amortissement a une épaisseur de 1 mm.

8. Pneumatique à carcasse radiale selon l'une quelconque des revendications 1 à 7, caractérisé en ce que la couche de caoutchouc d'amortissement comprend un mélange de caoutchouc naturel NR et de caoutchouc de butadiène BR dans un rapport égal à 60/40.

FIG1

FIG.2

FIG.3

FIG.4

FIG.5

FIG.6

FIG.7

FIG.8

## FIG.9

FIG.10